# EUROPEAN PATENT SPECIFICATION

(11) **EP 4 194 283 B1**
(45) Date of publication and mention of the grant of the patent: **12.06.2024**
(21) Application number: 21315269.7
(22) Date of filing: 08.12.2021
(51) Int. Cl.: B60S 1/48, B60S 1/54, B60S 1/52, B60S 1/50

(54) **FLUIDIC DISTRIBUTION SYSTEM FOR CLEANING VEHICLE SURFACES**
FLUIDVERTEILUNGSSYSTEM ZUR REINIGUNG VON FAHRZEUGOBERFLÄCHEN
SYSTÈME DE DISTRIBUTION DE FLUIDE POUR NETTOYER DES SURFACES DE VÉHICULE

(43) Date of publication of application: 14.06.2023
(73) Proprietor: A. Raymond et Cie, 38000 Grenoble (FR)
(72) Inventor: Zimmer, Jochen, 38000 GRENOBLE (FR)
(74) Representative: IP Trust

(56) References cited:
- EP-A1- 2 815 936
- WO-A1-2014/010579
- WO-A1-2020/078703
- CN-A- 112 172 744
- US-A1- 2019 126 891

## Description

### FIELD OF THE INVENTION

The invention relates to the field of fluid distribution systems, in particular for the cleaning of surface sensors of vehicles.

More particularly, the invention relates to a fluid distribution system designed to allow continuous operation while limiting the amount of fluid actually stored under pressure in the vehicle.

### TECHNOLOGICAL BACKGROUND OF THE INVENTION

Motor vehicles are now equipped with numerous sensors or cameras (hereinafter "sensors") for driving assistance purposes. These sensors are located around the entire perimeter of the vehicle, for example in the bumpers and/or side skirts, and thus provide the driver or driving software with a complete view of the environment in which the vehicle is located.

However, these sensors, exposed to the environment, are likely to be covered with dirt or dust and, consequently, may see their performance degraded. Frequent cleanings of these sensors are therefore necessary to guarantee their performance.

In this respect, motor vehicles can be equipped with a cleaning system, in particular with ducts and nozzles for the distribution of cleaning fluids. The nozzles are located at the ends of the fluid distribution ducts and in the vicinity of the sensors. These cleaning systems can also include automatic valves allowing the selection of the sensor(s) to be cleaned and thus limiting the consumption of cleaning fluid.

In this regard, the document [1] cited at the end of the description discloses a system configured to clean, in particular automatically, the sensor surfaces of an autonomous vehicle.

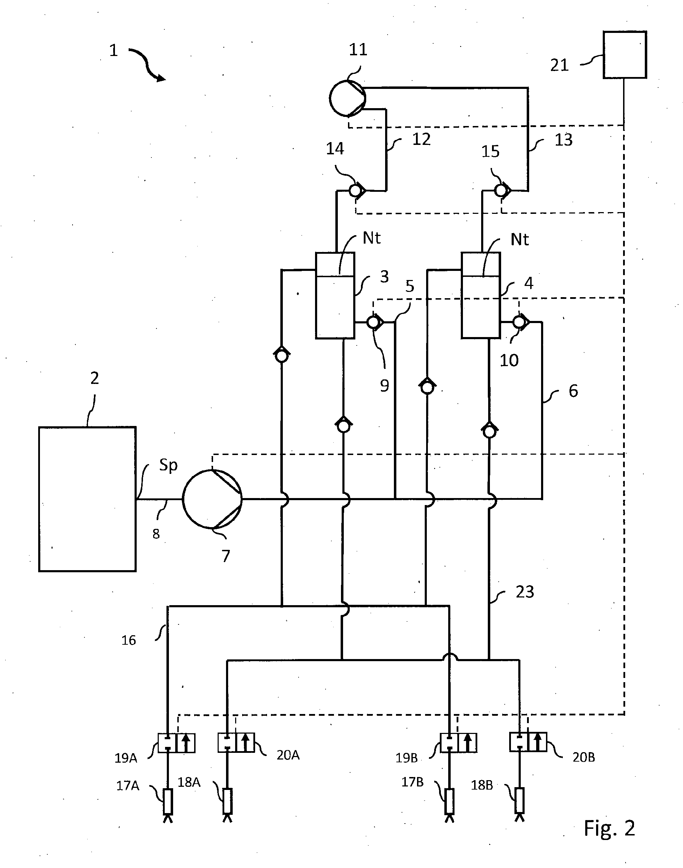

Notably, and as depicted in Figure 2 of document [1], the system 200 is provided with two tanks. In particular, the system 200 includes a main tank 202 and another tank 208.

The main tank 202 is configured to store a cleaning fluid at reduced pressure, such as atmospheric pressure, and is particularly implemented when cleaning surfaces that do not require consideration of high pressures. For example, the main tank 202 can be used for cleaning a windshield or a rear window of a motor vehicle.

The tank 208, for its part, is configured to store the cleaning fluid and to maintain it under pressure by means of a pressurized gas and is used in particular when the cleaning of surfaces requires pressures well above atmospheric pressure, for example above 4.8 bar. As an example, the tank 208 can be used for cleaning the surfaces of sensors of the motor vehicle.

The system 200 also includes a pressurized gas source 206 and a pressure transfer means 204. In particular, the pressurized gas source 206 and the pressure transfer means 204 are configured to allow the tank 208 to be filled with cleaning fluid, from the main tank, and to pressurize said cleaning fluid by injection of pressurized gas.

However, such a system is not satisfactory.

Indeed, the system 200 disclosed in document [1] requires the implementation of a large capacity tank 208 in order to -ensure sufficient autonomy for sensor cleaning. Also, maintaining a large volume of cleaning fluid under high pressure represents a danger for the vehicle housing it.

The document [2] cited at the end of the description also discloses a system configured to clean sensor surfaces of a vehicle.

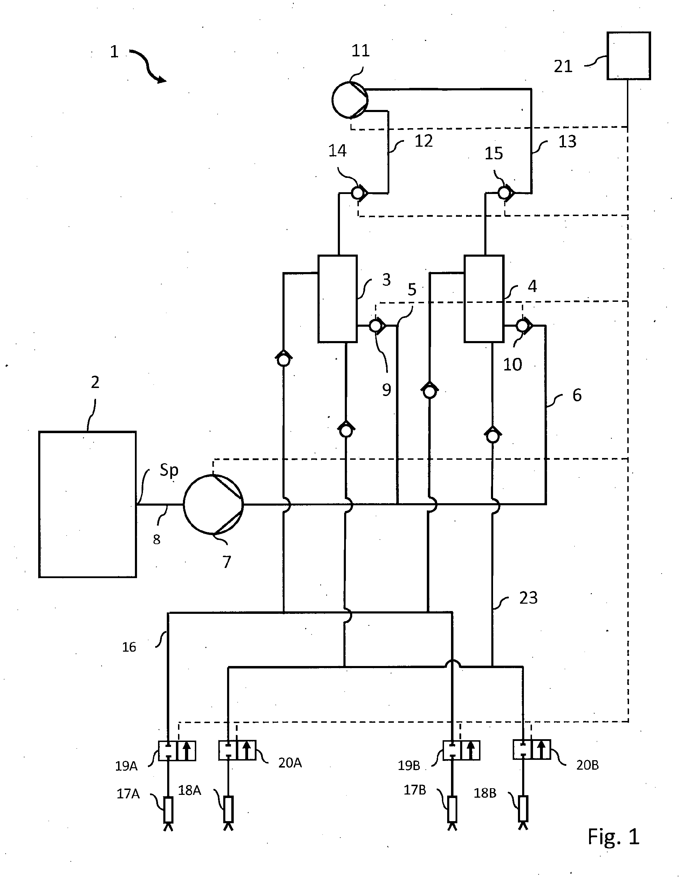

This system, particularly illustrated in figure 1 of [2], includes a cleaning fluid tank 50A and a gas tank 50B. The tanks 50A and 50B are further fluidly connected so as to allow compression of the cleaning fluid in the tank 50B.

Nevertheless, this system is not satisfactory either.

Indeed, the system described in document [2] requires the implementation of a large gas tank 50B which, like the system described in document [1], also represents a danger.

Moreover, the system described in document [2] includes a relatively large number of components/elements, which consequently makes it more complex to assemble and to use. EP-A-2815936 shows the preamble of claim 1.

It is therefore an object of the present invention to provide a fluid distribution system for cleaning vehicle sensors in which the amount of cleaning fluid maintained under pressure is reduced in comparison with solutions known in the prior art.

Another purpose of the present invention is also to provide a fluid delivery system for cleaning sensors of a vehicle that has sufficient autonomy.

Another purpose of the present invention is also to provide a fluid delivery system for cleaning sensors of a vehicle that has a reduced footprint compared to known solutions of the prior art.

Another purpose of the present invention is also to provide a fluid delivery system for cleaning sensors of a vehicle that has a reduced number of components compared to known solutions in the prior art.

### BRIEF DESCRIPTION OF THE INVENTION

The present invention relates to a fluidic delivery system for cleaning surfaces of a vehicle, the delivery system comprising:
- a main tank with a main volume and intended to store a cleaning fluid at a pressure called main pressure;
- two secondary tanks, called, respectively, the first and second tank, each having a volume, called secondary volume, smaller than the main volume;
- filling means configured to allow selective filling of both the first tank and the second tank with cleaning fluid from the main tank;
- compression means configured to inject air selectively into one and the other of the first tank and the second tank, and so as to impose a working pressure, higher than the main pressure, on the cleaning fluid likely to be present in the considered secondary tank;
- dispensing means configured to selectively dispense from either of the first and second tanks cleaning fluid and/or air for cleaning surfaces.

According to an embodiment, said fluidic distribution system comprises control means configured to control the compression means and the filling means so as to allow the filling with cleaning fluid and then the injection of air on one of the two secondary tanks, while the other of these two secondary tanks is operated to distribute cleaning fluid and/or air via the dispensing means.

According to an embodiment, the filling means comprises a first conduit and a second conduit fluidly connecting the main tank with, respectively, the first tank and the second tank.

According to an embodiment, the filling means comprises a pump, called filling pump, interposed between the main tank and, respectively, the first conduit and the second conduit.

According to an embodiment, the filling means comprises a multi-way valve, called filling valve, configured to allow selective filling of cleaning fluid into either of the first tank and the second tank from the main tank.

According to an embodiment, the filling means comprises a first valve and a second valve disposed on the first conduit and the second conduit respectively.

According to an embodiment, the compression means comprises an air compressor configured to inject air into both the first tank and the second tank, and so as to impose on the cleaning fluid likely to be present in either of the first tank and the second tank a pressure in the 2.5 bar to 15 bar pressure range, advantageously in the 5 bar to 12 bar pressure range, more advantageously in the 5 bar to 8 bar pressure range.

According to an embodiment, the compression means comprise a third conduit and a fourth conduit fluidly connecting the air compressor to the first tank and the second tank, respectively.

According to an embodiment, the compression means comprises a multi-way valve, called compression valve, configured to allow selective injection of pressurized air by the air compressor into either of the first tank and the second tank from the air compressor.

According to an embodiment, the compression means comprises a third valve and a fourth valve disposed on the third conduit and the fourth conduit respectively.

According to an embodiment, the third valve and the fourth valve are configured to pressurize the one and/or the other of the secondary tanks by pressure difference, advantageously, the third valve and the fourth valve are check valves.

According to an embodiment, the dispensing means comprise a plurality of distribution conduits and a plurality of nozzles fluidly connected to either of the first tank and the second tank, the nozzles being configured to project cleaning fluid and/or pressurized air drawn from either of the first tank and the second tank.

According to an embodiment, the main tank and/or the first tank and/or the second tank comprises heating means configured to heat cleaning fluid likely to be present in the considered tank among the main tank, the first tank and the second tank to a temperature above a predetermined temperature.

According to an embodiment, the dispensing means are arranged to allow recirculation, into the main tank and/or the first tank and/or the second tank, of the cleaning fluid susceptible to being present in said dispensing means.

According to an embodiment, the secondary volume is less than half the primary volume, advantageously, the secondary volume is less than 700 mL, more advantageously less than 500 mL.

### BRIEF DESCRIPTION OF THE DRAWINGS

Further features and advantages of the invention will be apparent from the following detailed description with reference to the attached figures, in which:
The figure 1 is a schematic representation of a fluidic distribution system according to the first embodiment of the present invention ;
The figure 2 is a schematic representation of the fluidic distribution system of figure 1, with the first tank comprising a level Nt of cleaning fluid, and the second tank comprising a level Nt of cleaning fluid;
The Figure 3 is a schematic representation of the fluidic distribution system of Figure 1, with the first tank comprising a level Ns of cleaning fluid, and the second tank comprising a level Nt of cleaning fluid;
The figure 4 is a schematic representation of the fluidic distribution system of Figure 1, with the first tank comprising a level Nt of cleaning fluid;
The figure 5 is a schematic representation of a motor vehicle provided with a fluidic distribution system according to the terms of the present invention;
The figure 6 is a schematic representation of a fluidic distribution system according to the second embodiment of the present invention.

### DETAILED DESCRIPTION OF THE INVENTION

The present invention relates to a fluidic distribution system for cleaning the surface of sensors in a motor vehicle, and more particularly in an autonomous vehicle.

In this regard, the fluidic distribution system according to the present invention is particularly suitable for removing dust and/or dirt that may be present on the surface of the sensor(s) of a vehicle.

These sensors may include, but are not limited to, a camera, LIDAR, RADAR, or any other type of sensor that may be implemented in a motor vehicle. In particular, the fluidic distribution system according to the present invention may comprise nozzles configured to project cleaning fluid and/or pressurized air onto the surfaces of the sensors. In this regard, the nozzles are arranged in proximity to the surfaces and may be static or movable.

Thus, the invention relates to a fluidic delivery system for cleaning surfaces of a vehicle, the delivery system comprising:
- a main tank with a main volume and intended to store a cleaning fluid at a pressure called main pressure;
- two secondary tanks, called, respectively, the first and second tank, each having a volume, called secondary volume, smaller than the main volume;
- filling means configured to allow selective filling of both the first tank and the second tank with cleaning fluid from the main tank;
- compression means configured to inject air selectively into one and the other of the first tank and the second tank, and so as to impose a working pressure, higher than the main pressure, on the cleaning fluid likely to be present in the secondary tank in question;
- dispensing means configured to selectively dispense from either of the first and second tanks cleaning fluid and/or air for cleaning surfaces.

Figure 1 shows an example of a fluid distribution system 1 for cleaning vehicle surfaces.

In particular, the fluidic distribution system 1 comprises a main tank 2 intended to store cleaning fluid at a pressure called main pressure. In particular, the main tank 2 has a volume, referred to as the main volume, of several liters, for example more than 3 liters, or even more than 4 liters. The main pressure may be less than 1.5 bar, and in particular equal to the atmospheric pressure.

The fluidic distribution system 1 also includes two secondary tanks, called first tank 3 and second tank 4, respectively. The secondary tanks each have a volume, called secondary volume, that is smaller than the main volume.

More particularly, the secondary volume is advantageously less than half of the primary volume, advantageously, less than one third of the primary volume, even more advantageously, less than one fifth of the primary volume. For example, the secondary volume is less than 700 mL, advantageously less than 500 mL.

The secondary volumes of each of the secondary tanks may be equal. However, the invention is not limited to this aspect, and the consideration of a first tank and a second tank of different volumes is within the scope of the present invention.

The fluidic distribution system 1 according to the present invention also comprises means for filling the secondary tanks 3 and 4. More particularly, the filling means are configured to allow selective filling of either of the first tank 3 and the second tank 4 with cleaning fluid from the main tank 2.

By "selective filling" is meant a filling that allows one of the secondary tanks to be filled independently of the other of said secondary tanks. In other words, the filling means are notably configured to allow the filling with cleaning fluid of one of the first and second tanks while the other of these two secondary tanks does not receive any cleaning fluid.

In particular, the filling means may comprise conduits fluidly connecting the main tank 2 with one and the other of the first tank 3 and the second tank 4. Thus, the filling means may comprise a first conduit 5 and a second conduit 6 fluidly connecting the main tank 2 with, respectively, the first tank 3 and the second tank 4.

The filling means can also comprise a pump, called a filling pump 7, interposed between the main tank 2 and, respectively, the first conduit 5 and the second conduit 6. The filling pump 7 can notably comprise a low-pressure pump, and more particularly, a pump configured to take cleaning fluid from the main tank 2 and inject it into one or the other of the first conduit 5 and the second conduit 6 at a pressure lower than 1.5 bar.

The filling means may further comprise a main conduit 8 fluidly connecting an outlet, called main outlet Sp, of the main tank 2 with, respectively, the first conduit 5 and the second conduit 6. In this respect, the filling pump 7 may be connected (disposed) on the main conduit 8.

The filling means may also include one or more valves, in particular solenoid valves, to allow the flow of cleaning fluid into either of the first conduit 5 and the second conduit 6 for the purpose of filling the first tank 3 and the second tank 6, respectively.

In this regard, the one or more valves may be configured to allow selective flow into either of the first conduit 5 and the second conduit 6.

In particular, and as illustrated in figure 1, the filling means comprise a first valve 9 and a second valve 10 disposed respectively on the first conduit 5 and the second conduit 6. Such an arrangement makes it possible to allow the flow of cleaning fluid in one of the first conduit and the second conduit independently of each other. In other words, it is possible to allow the flow of cleaning fluid in one of these conduits while the other remains closed by the valve it carries.

The first valve 9 and the second valve 10 can each comprise a solenoid valve, and more particularly a solenoid valve provided with a check valve.

According to a variant of the present invention, instead of implementing the first valve 9 and the second valve 10, the person skilled in the art will be able to consider filling means provided with a multiway valve connecting the main conduit with, respectively, the first conduit 5 and the second conduit 6. More particularly, and according to this variant, the multiway valve can be configured to adopt a closed position, a first open position and a second open position.

The closed position is a position that prevents fluid flow into either of the first and second conduits, while the first open position and the second open position allow fluid flow from the main conduit to the first and second conduits, respectively.

The fluidic distribution system also includes compression means configured to inject air selectively into one and the other of the first and second tanks, and so as to impose a working pressure, higher than the main pressure, on the cleaning fluid likely to be present in the secondary tank in question.

By "selectively injecting air" is meant injecting air into one of the secondary tanks independently of the other of said secondary tanks. In other words, the compression means are notably configured to allow the injection of air into one of the first and second tanks while the other of these two secondary tanks does not receive air.

The compression means may comprise an air compressor 11 configured to inject air into either of the first tank 5 and the second tank 6. In particular, the air compressor may be configured to impose on the cleaning fluid likely to be present in either of the first tank 5 and the second tank 6 a pressure in the 2.5 bar to 15 bar pressure range, advantageously in the 5 bar to 12 bar pressure range, more advantageously in the 5 bar to 8 bar pressure range.

The compression means may also include a third conduit 12 and a fourth conduit 13 fluidly connecting the air compressor 11, respectively, to the first tank 5 and the second tank 6.

The compression means may also comprise one or more valves, and in particular check valves, allowing the injection of pressurized air into either of the first tank 3 and the second tank 4 via, respectively, the third conduit 12 and the fourth conduit 13.

In this regard, the one or more valves may be configured to allow the injection of pressurized air selectively into one or the other of the first tank 3 and the second tank 4.

In particular, and as illustrated in Figure 1; the compression means comprise a third valve 14 and a fourth valve 15 disposed respectively on the third conduit 12 and the fourth conduit 13. Such an arrangement makes it possible to allow the injection of pressurized air into one of the first tank 3 and the second tank independently of each other. In other words, it is possible to inject pressurized air into one of these tanks while the other remains closed.

The third valve 14 and the fourth valve 15 may each comprise a check valve and are therefore configured to pressurize the one and/or the other of the secondary tanks by pressure difference, advantageously, the third valve and the fourth valve are check valves.

According to a variant of the present invention, instead of implementing the third valve 14 and the fourth valve 15, the person skilled in the art will be able to consider compression means provided with a multiway valve connecting the air compressor 11 with, respectively, the third conduit 12 and the fourth conduit 13. More particularly, and according to this variant, the multi-way valve can be configured to adopt a closed position, a first open position and a second open position.

The closed position is a position preventing the injection of air into either of the first 3 and second 4 tanks, while the first open position and second open position allow an injection of pressurized air into the first 3 and second 4 tanks, respectively.

The fluidic distribution system 1 further comprises dispensing means configured to selectively distribute from either of the first tank and the second tank cleaning fluid and/or air for cleaning surfaces.

In this regard, the dispensing means comprise a plurality of dispensing conduits and a plurality of nozzles. In particular, and according to a first embodiment, the plurality of nozzles comprises air nozzles 17A, 17B and cleaning fluid nozzles 18A and 18B fluidly connected to either of the first tank 3 and the second tank 4. Notably, the air nozzles 17A and 17B are fluidly configured to spray air provided from one or the other of the first tank 3 and the second tank 4. To this regard, the air nozzles 17A and 17B are fluidly connected to the first tank 3 and the second tank 4 via air distribution means. The air distribution means can comprise air conduits 16 connected to the first tank 3 and the second tank 4 and configured to distribute the pressurized air to the air nozzles 17A and 17B. The air distribution means can further comprise valves, called air valves 19A and 19B, each air valve 19A and 19B being dedicated to a specific air nozzle 17A and 17B. The air conduits 16 can further comprise check-valve configured for preventing a back flow of the pressurized air into the first tank and the second tank.

The cleaning fluid nozzles 18A and 18B are fluidly configured to spray the cleaning fluid provided from one or the other of the first tank 3 and the second tank 4. To this regard, the cleaning fluid nozzles 18A and 18B are fluidly connected to the first tank 3 and the second tank 4 via fluid distribution means. The fluid distribution means can comprise fluid conduits 23 connected to the first tank 3 and the second tank 4 and configured to distribute the pressurized cleaning fluid to the cleaning fluid nozzles 18A and 18B. The fluid distribution means can further comprise valves, called fluid valves 20A and 20B, each fluid valve 20A and 20B being dedicated to a specific cleaning fluid nozzle 18A and 18B. The fluid conduits 23 can further comprise check-valve configured for preventing a back flow of the cleaning fluid into the first tank and the second tank.

The first tank 3 and the second tank 4 may also include heating means configured to heat the cleaning fluid that may be present in the relevant secondary tank, at a temperature above a predetermined temperature.

The main tank can comprise heating means configured to heat cleaning fluid likely to be present in said main tank to a temperature above a predetermined temperature.

The heating element, whatever the tank considered, may comprise an PTC ("Positive Temperature Coefficient Thermistor") element.

Advantageously, the dispensing means are arranged to allow a recirculation, in one and/or the other of the secondary tanks, of the cleaning fluid likely to be present in said dispensing means.

Finally, the fluidic distribution system may comprise control means 21 configured to control the compression means and the filling means so as to allow the filling with cleaning fluid and then the injection of air into one of the two secondary tanks, while the other of these two secondary tanks is operated to distribute cleaning fluid and/or air via the dispensing means.

The control means may include a computer, a processor, or any other means capable of controlling and/or commanding the execution of steps such as a step of filling a secondary tank, or a step of injecting pressurized air into one of said secondary tanks.

The control means according to the present invention control in particular, and independently, the valves, the solenoid valves, the pumps or compressors and any constituent element of the fluidic distribution system.

In particular, the device according to the present invention allows the filling of cleaning fluid and/or pressurized air into both the first tank and the second tank and independently.

In particular, in figure 2, the first tank 3 and the second tank 4 have a cleaning fluid filling level, known as the working level, noted Et, and pressurized with pressurized air. According to this configuration, the two secondary tanks 3 and 4 are ready to deliver cleaning fluid, under pressure, as well as pressurized air to the nozzles.

As soon as the cleaning of a sensor surface is necessary, the control means 21 control the distribution of cleaning fluid and/or pressurized air from one of the secondary tanks.

For example, cleaning fluid may be drawn from the first tank to clean the surface of a sensor with nozzle 18A. The same operation can also be conducted for cleaning other sensors with nozzle 18B. In parallel, pressurized air may be drawn from the first tank to clean the surface of a sensor with nozzle 17A.

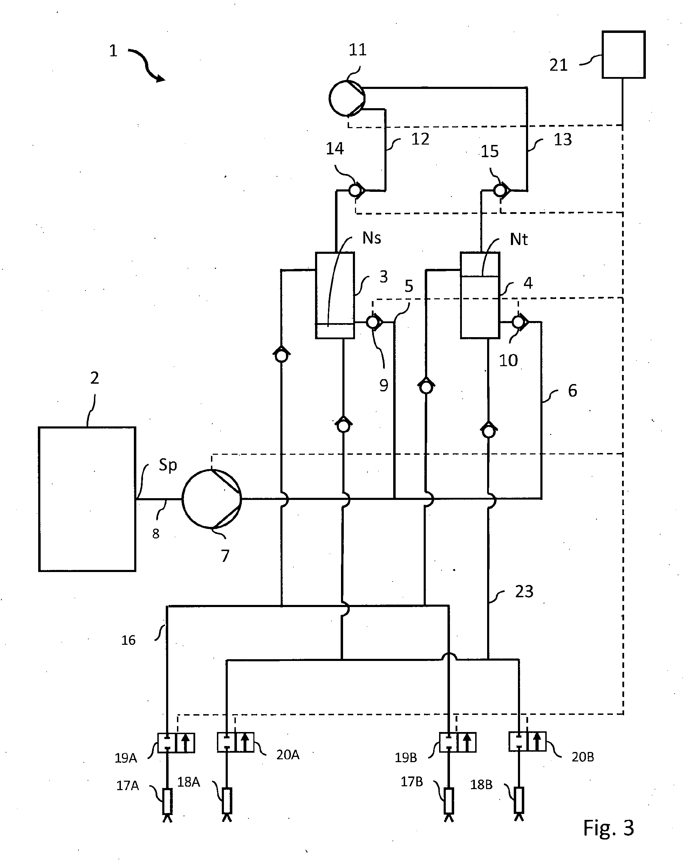

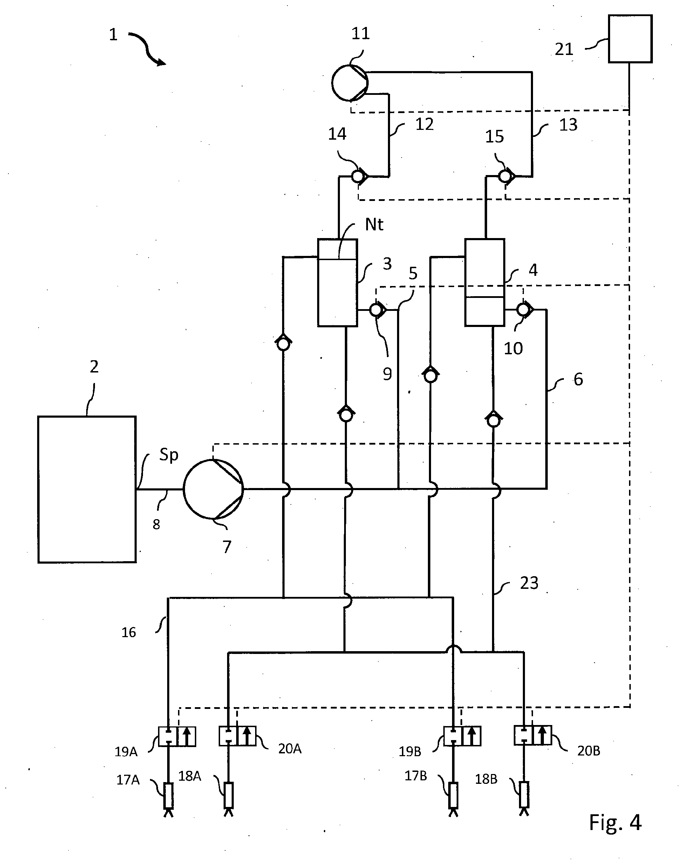

At the end of several successive cleaning operations, the first tank may have a cleaning fluid level below a threshold level Ns (Figure 3). The fluidic distribution system is then configured to stop all dispenses from the first tank, and to control the distribution of cleaning fluid and/or pressurized air from the second tank 4. During the dispense of cleaning fluid and/or pressurized air from the second tank, the control means 21 are also configured to control the refilling of the first tank with cleaning fluid from the main tank, on the one hand, and with pressurized air, on the other hand (figure 4).

The arrangement according to the present invention allows, despite the consideration of relatively small volume tanks, the continuous distribution of cleaning fluid and/or pressurized air for the cleaning of surfaces, especially sensor surfaces.

In addition, secondary tanks of relatively small volume limit the risks associated with the presence of pressurized fluid in a motor vehicle.

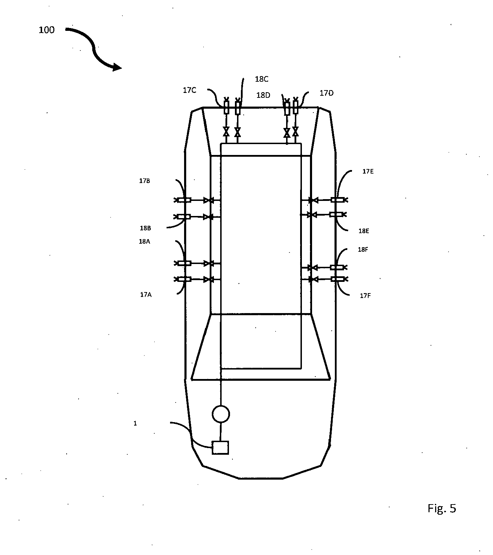

In this regard, Figure 5 depicts a motor vehicle 100 provided with the fluidic distribution system 1 according to the terms of the present invention. Notably, the fluidic distribution system includes a plurality of nozzles 17A through 17F, and 18A through 18F.

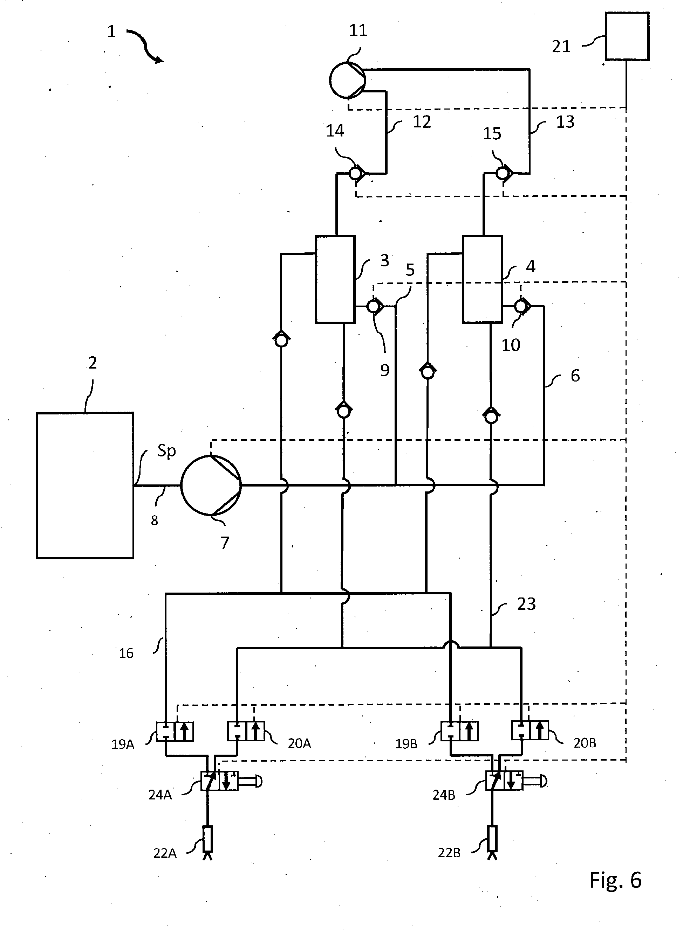

Figure 6 illustrates a second embodiment of the fluid distribution system 1. This second embodiment differs from the first embodiment in that it comprises nozzles 22A and 22B configured to spray both pressurized air and cleaning fluid provided from one or the other of the first tank 3 and the second tank 4.

To this regard, the nozzles 22A and 22B are fluidly connected to the first tank 3 and the second tank 4 via the air distribution means and via the cleaning fluid distribution means. In other words, each nozzle 22A and 22B is fluidly connected to both the air conduits 16 and the fluid conduits 23. The air distribution means can comprise air conduits 16 connected to the first tank 3 and the second tank 4 and configured to distribute the pressurized air to the nozzles 22A and 22B.

The nozzles 18A and 18B are fluidly connected to the first tank 3 and the second tank 4 via fluid distribution means. The fluid distribution means can comprise fluid conduits 23 connected to the first tank 3 and the second tank 4 and configured to distribute the pressurized cleaning fluid to the cleaning fluid nozzles 18A and 18B.

According to this configuration, the nozzle 22A is associated with both air valve 19A and fluid valve 20A. In addition, a multiway valve 24A can be interposed between the nozzle 22A and both air valve 19A and fluid valve 20A.

Similarly, the nozzle 22B is associated with both air valve 19B and fluid valve 20B. In addition, a multiway valve 24B can be interposed between the nozzle 22B and both air valve 19B and fluid valve 20B.

The invention is not limited to two nozzles and the skilled in the art, on the basis of this description, will be able consider a fluid distribution system comprising more than two nozzles.

Of course, the invention is not limited to the embodiments described and alternative embodiments may be made without departing from the scope of the invention as defined by the claims.

### REFERENCES

[1] US10723325B2;
[2] DE10 2019 125 970 A1;

## Claims

1. A fluidic distribution system (1) for cleaning surfaces of a vehicle, the distribution system (1) comprising:
- a main tank (2) with a main volume and intended to store a cleaning fluid at a pressure called main pressure;
- two secondary tanks, called, respectively, the first (3) and second (4) tank, each having a volume, called secondary volume, smaller than the main volume;
- filling means configured to allow selective filling of both the first tank (3) and the second tank (4) with cleaning fluid from the main tank (2);
**characterized by** further comprising
- compression means configured to inject air selectively into one and the other of the first tank (3) and the second tank (4), and so as to impose a working pressure, higher than the main pressure, on the cleaning fluid likely to be present in the considered secondary tank;
- dispensing means configured to selectively dispense from either of the first and second tanks cleaning fluid and/or air for cleaning surfaces.

2. The fluidic distribution system (1) of claim 1, wherein said fluidic distribution system (1) comprises control means (21) configured to control the compression means and the filling means so as to allow the filling with cleaning fluid and then the injection of air on one of the two secondary tanks, while the other of these two secondary tanks is operated to distribute cleaning fluid and/or air via the dispensing means.

3. The fluidic distribution system (1) of claim 1 or 2, wherein the filling means comprises a first conduit (5) and a second conduit (6) fluidly connecting the main tank (2) with, respectively, the first tank (3) and the second tank (4).

4. The fluidic distribution system (1) of claim 3, wherein the filling means comprises a pump, called filling pump (7), interposed between the main tank (2) and, respectively, the first conduit (5) and the second conduit (6).

5. The fluidic distribution system (1) of claim 3 or 4, wherein the filling means comprises a multi-way valve, called filling valve, configured to allow selective filling of cleaning fluid into either of the first tank (3) and the second tank (4) from the main tank (2).

6. The fluidic distribution system (1) of claim 3 or 4, wherein the filling means comprises a first valve (9) and a second valve (10) disposed on the first conduit (5) and the second conduit (6) respectively.

7. The fluid distribution system (1) according to any of claims 1 to 6, wherein the compression means comprises an air compressor (11) configured to inject air into both the first tank (3) and the second tank (4), and so as to impose on the cleaning fluid likely to be present in either of the first tank (3) and the second tank (4) a pressure in the 2.5 bar to 15 bar pressure range, advantageously in the 5 bar to 12 bar pressure range, more advantageously in the 5 bar to 8 bar pressure range.

8. The fluid distribution system (1) of claim 7, wherein the compression means comprise a third conduit (12) and a fourth conduit (13) fluidly connecting the air compressor to the first tank (3) and the second tank (4), respectively.

9. The fluidic distribution system (1) of claim 8, wherein the compression means comprises a multi-way valve, called compression valve, configured to allow selective injection of pressurized air by the air compressor into either of the first tank (3) and the second tank (4) from the air compressor.

10. The fluidic distribution system (1) of claim 8, wherein the compression means comprises a third valve (14) and a fourth valve (15) disposed on the third conduit and the fourth conduit respectively.

11. The fluidic distribution system (1) of claim 10, wherein the third valve and the fourth valve are configured to pressurize the one and/or the other of the secondary tanks by pressure difference, advantageously, the third valve (14) and the fourth valve (15) are check valves.

12. The fluid distribution system (1) of any of claims 1 to 11, wherein the dispensing means comprise a plurality of distribution conduits and a plurality of nozzles fluidly connected to either of the first tank (3) and the second tank (4), the nozzles being configured to project cleaning fluid and/or pressurized air drawn from either of the first tank (3) and the second tank (4).

13. The fluidic distribution system (1) of any of claims 1 to 12, wherein the main tank (2) and/or the first tank (3) and/or the second tank (4) comprises heating means configured to heat cleaning fluid likely to be present in the considered tank among the main tank (2), the first tank (3) and the second tank (4) to a temperature above a predetermined temperature.

14. The fluidic dispensing system of claim 13, wherein the dispensing means are arranged to allow recirculation, into the main tank (2) and/or the first tank (3) and/or the second tank (4), of the cleaning fluid susceptible to being present in said dispensing means.

15. The fluidic delivery system of any of claims 1 to 14, wherein the secondary volume is less than half the primary volume, advantageously, the secondary volume is less than 700 mL, more advantageously less than 500 mL.

## Patentansprüche

1. Fluidisches Verteilungssystem (1) zum Reinigen von Oberflächen eines Fahrzeugs, das Verteilungssystem (1) umfassend:
- einen Haupttank (2) mit einem Hauptvolumen und dazu bestimmt, eine Reinigungsfluid bei einem Druck zu speichern, genannt Hauptdruck;
- zwei Sekundärtanks, der erste (3) bzw. der zweite (4) Tank genannt, die jeweils ein Volumen, Sekundärvolumen genannt, aufweisen, das geringer als das Hauptvolumen ist;
- Füllmittel, das konfiguriert ist, um ein selektives Befüllen sowohl des ersten Tanks (3) als auch des zweiten Tanks (4) mit Reinigungsfluid aus dem Haupttank (2) zu ermöglichen;
**dadurch gekennzeichnet, dass** es ferner umfasst
- Kompressionsmittel, das konfiguriert ist, um wahlweise Luft in einen und den anderen des ersten Tanks (3) und des zweiten Tanks (4) einzuführen, um einen Arbeitsdruck, der höher als der Hauptdruck ist, auf das Reinigungsfluid auszuüben, das in dem betreffenden Sekundärtank vorhanden sein kann;
- Ausgabemittel, das konfiguriert ist, um wahlweise aus einem des ersten oder des zweiten Tanks Reinigungsfluid und/oder Luft zum Reinigen von Oberflächen auszugeben.

2. Fluidisches Verteilungssystem (1) nach Anspruch 1, wobei das fluidische Verteilungssystem (1) ein Steuermittel (21) umfasst, das konfiguriert ist, um das Kompressionsmittel und das Füllmittel zu steuern, um das Befüllen mit Reinigungsfluid und dann das Einführen von Luft in einen der zwei Sekundärtanks zu ermöglichen, während der andere dieser zwei Sekundärtanks betrieben wird, um Reinigungsfluid und/oder Luft über das Ausgabemittel zu verteilen.

3. Fluidisches Verteilungssystem (1) nach Anspruch 1 oder 2, wobei das Füllmittel eine erste Leitung (5) und eine zweite Leitung (6) umfasst, die den Haupttank (2) mit dem ersten Tank (3) bzw. dem zweiten Tank (4) fluidisch verbinden.

4. Fluidisches Verteilungssystem (1) nach Anspruch 3, wobei das Füllmittel eine Pumpe, Füllpumpe (7) genannt, umfasst, die zwischen dem Haupttank (2) und der ersten Leitung (5) bzw. der zweiten Leitung (6) angeordnet ist.

5. Fluidisches Verteilungssystem (1) nach Anspruch 3 oder 4, wobei das Füllmittel ein Mehrwegventil, Befüllventil genannt, umfasst, das konfiguriert ist, um ein wahlweises Befüllen von Reinigungsfluid aus dem Haupttank (2) in einen des ersten Tanks (3) oder des zweiten Tanks (4) zu ermöglichen.

6. Fluidisches Verteilungssystem (1) nach Anspruch 3 oder 4, wobei das Füllmittel ein erstes Ventil (9) und ein zweites Ventil (10) umfasst, die an der ersten Leitung (5) bzw. an der zweiten Leitung (6) angeordnet sind.

7. Fluidverteilungssystem (1) nach einem der Ansprüche 1 bis 6, wobei das Kompressionsmittel einen Luftkompressor (11) umfasst, der konfiguriert ist, um Luft sowohl in den ersten Tank (3) als auch in den zweiten Tank (4) einzuführen, und um auf das Reinigungsfluid, das in einem des ersten Tanks (3) oder des zweiten Tanks (4) vorhanden sein kann, einen Druck in dem Druckbereich von 2,5 Bar bis 15 Bar, vorteilhafterweise in dem Druckbereich von 5 Bar bis 12 Bar, noch vorteilhafter in dem Druckbereich von 5 Bar bis 8 Bar, auszuüben.

8. Fluidverteilungssystem (1) nach Anspruch 7, wobei das Kompressionsmittel eine dritte Leitung (12) und eine vierte Leitung (13) umfasst, die den Luftkompressor mit dem ersten Tank (3) bzw. dem zweiten Tank (4) fluidisch verbinden.

9. Fluidisches Verteilungssystem (1) nach Anspruch 8, wobei das Kompressionsmittel ein Mehrwegventil, Kompressionsventil genannt, umfasst, das konfiguriert ist, um eine wahlweise Einführung von Druckluft durch den Luftkompressor in einen des ersten Tanks (3) oder des zweiten Tanks (4) zu ermöglichen.

10. Fluidisches Verteilungssystem (1) nach Anspruch 8, wobei das Kompressionsmittel ein drittes Ventil (14) und ein viertes Ventil (15) umfasst, die an der dritten Leitung bzw. der vierten Leitung angeordnet sind.

11. Fluidisches Verteilungssystem (1) nach Anspruch 10, wobei das dritte Ventil und das vierte Ventil konfiguriert sind, um den einen und/oder den anderen der Sekundärtanks durch Druckunterschied unter Druck zu setzen, wobei das dritte Ventil (14) und das vierte Ventil (15) vorteilhafterweise Rückschlagventile sind.

12. Fluidverteilungssystem (1) nach einem der Ansprüche 1 bis 11, wobei das Ausgabemittel eine Vielzahl von Verteilungsleitungen und eine Vielzahl von Düsen umfasst, die mit einem des ersten Tanks (3) oder des zweiten Tanks (4) in Fluidverbindung stehen, wobei die Düsen konfiguriert sind, um Reinigungsfluid und/oder Druckluft, die aus einem des ersten Tanks (3) oder des zweiten Tanks (4) gezogen werden, auszuwerfen.

13. Fluidisches Verteilungssystem (1) nach einem der Ansprüche 1 bis 12, wobei der Haupttank (2) und/oder der erste Tank (3) und/oder der zweite Tank (4) ein Heizmittel umfasst, das konfiguriert ist, um das Reinigungsfluid, das in dem betreffenden Tank unter dem Haupttank (2), dem ersten Tank (3) und dem zweiten Tank (4) vorhanden sein kann, auf eine Temperatur über einer vorbestimmten Temperatur zu erhitzen.

14. Fluidisches Ausgabesystem nach Anspruch 13, wobei das Ausgabemittel angeordnet sind, um eine Rückführung des Reinigungsfluids, das anfällig ist, in dem Ausgabemittel vorhanden zu sein, in den Haupttank (2) und/oder den ersten Tank (3) und/oder den zweiten Tank (4) zu ermöglichen.

15. Fluidisches Liefersystem nach einem der Ansprüche 1 bis 14, wobei das Sekundärvolumen geringer als die Hälfte des Primärvolumens ist, vorteilhafterweise das Sekundärvolumen geringer als 700 ml, noch vorteilhafter geringer als 500 ml, ist.

## Revendications

1. Système de distribution fluidique (1) destiné à nettoyer des surfaces d'un véhicule, le système de distribution (1) comprenant :
- un réservoir principal (2) avec un volume principal et prévu pour stocker un fluide de nettoyage à une pression appelée pression principale ;
- deux réservoirs secondaires, respectivement appelés le premier (3) et le second réservoir (4), ayant chacun un volume, appelé volume secondaire, plus petit que le volume principal ;
- des moyens de remplissage conçus pour permettre le remplissage sélectif de l'un et l'autre du premier réservoir (3) et du second réservoir(4) avec du fluide de nettoyage provenant du réservoir principal (2) ;
**caractérisé en ce qu'il** comprend en outre
- des moyens de compression conçus pour injecter de l'air sélectivement dans l'un et l'autre du premier réservoir (3) et du second réservoir (4), et de façon à exercer une pression de travail, supérieure à la pression principale, sur le fluide de nettoyage susceptible d'être présent dans le réservoir secondaire en question ;
- des moyens de dispensation conçus pour dispenser sélectivement à partir de l'un ou l'autre des premier et second réservoirs du fluide de nettoyage et/ou de l'air pour nettoyer les surfaces.

2. Système de distribution fluidique (1) selon la revendication 1, ledit système de distribution fluidique (1) comprenant des moyens de commande (21) conçus pour commander les moyens de compression et les moyens de remplissage de manière à permettre le remplissage en fluide de nettoyage puis l'injection d'air sur l'un des deux réservoirs secondaires, tandis que l'autre de ces deux réservoirs secondaires est actionné pour distribuer du fluide de nettoyage et/ou de l'air par l'intermédiaire des moyens de dispensation.

3. Système de distribution fluidique (1) selon la revendication 1 ou 2, dans lequel les moyens de remplissage comprennent un premier conduit (5) et un deuxième conduit (6) raccordant fluidiquement le réservoir principal (2) avec, respectivement, le premier réservoir (3) et le second réservoir (4).

4. Système de distribution fluidique (1) selon la revendication 3, dans lequel les moyens de remplissage comprennent une pompe, appelée pompe de remplissage (7), interposée entre le réservoir principal (2) et, respectivement, le premier conduit (5) et le deuxième conduit (6).

5. Système de distribution fluidique (1) selon la revendication 3 ou 4, dans lequel les moyens de remplissage comprennent une vanne multivoie, appelée vanne de remplissage, conçue pour permettre le remplissage sélectif de liquide de nettoyage dans l'un ou l'autre du premier réservoir (3) et du second réservoir (4) à partir du réservoir principal (2).

6. Système de distribution fluidique (1) selon la revendication 3 ou 4, dans lequel les moyens de remplissage comprennent une première vanne (9) et une deuxième vanne (10) respectivement disposées sur le premier conduit (5) et le deuxième conduit (6).

7. Système de distribution fluidique (1) selon l'une quelconque des revendications 1 à 6, dans lequel les moyens de compression comprennent un compresseur d'air (11) conçu pour injecter de l'air dans l'un et l'autre du premier réservoir (3) et du second réservoir (4), et de manière à exercer sur le fluide de nettoyage susceptible d'être présent dans l'un ou l'autre du premier réservoir (3) et du second réservoir (4) une pression dans la plage de pression de 2,5 bar à 15 bar, avantageusement dans la plage de pression de 5 bar à 12 bar, plus avantageusement dans la plage de pression de 5 bar à 8 bar.

8. Système de distribution fluidique (1) selon la revendication 7, dans lequel les moyens de compression comprennent un troisième conduit (12) et un quatrième conduit (13) raccordant fluidiquement le compresseur d'air au premier réservoir (3) et au second réservoir (4), respectivement.

9. Système de distribution fluidique (1) selon la revendication 8, dans lequel les moyens de compression comprennent une vanne multivoie, appelée vanne de compression, conçue pour permettre l'injection sélective d'air sous pression par le compresseur d'air dans l'un ou l'autre du premier réservoir (3) et du second réservoir (4) à partir du compresseur d'air.

10. Système de distribution fluidique (1) selon la revendication 8, dans lequel les moyens de compression comprennent une troisième vanne (14) et une quatrième vanne (15) respectivement disposées sur le troisième et le quatrième conduit.

11. Système de distribution fluidique (1) selon la revendication 10, dans lequel la troisième vanne et la quatrième vanne sont conçues pour pressuriser l'un et/ou l'autre des réservoirs secondaires par différence de pression, la troisième vanne (14) et la quatrième vanne (15) étant avantageusement des clapets anti-retour.

12. Système de distribution fluidique (1) selon l'une quelconque des revendications 1 à 11, dans lequel les moyens de dispensation comprennent une pluralité de conduits de distribution et une pluralité de buses raccordées fluidiquement au premier réservoir (3) et au second réservoir (4), les buses étant conçues pour projeter du fluide de nettoyage et/ou de l'air sous pression provenant de l'un ou l'autre du premier réservoir (3) et du second réservoir (4).

13. Système de distribution fluidique (1) selon l'une quelconque des revendications 1 à 12, dans lequel le réservoir principal (2) et/ou le premier réservoir (3) et/ou le second réservoir (4) comprennent des moyens de chauffage conçus pour chauffer le liquide de nettoyage susceptible d'être présent dans le réservoir considéré parmi le réservoir principal (2), le premier réservoir (3) et le second réservoir (4) à une température supérieure à une température prédéterminée.

14. Système de distribution fluidique selon la revendication 13, dans lequel les moyens de dispensation sont conçus pour permettre la recirculation, dans le réservoir principal (2) et/ou le premier réservoir (3) et/ou le second réservoir (4), du liquide de nettoyage susceptible d'être présent dans lesdits moyens de dispensation.

15. Système de distribution fluidique selon l'une quelconque des revendications 1 à 14, dans lequel le volume secondaire est inférieur à la moitié du volume primaire, avantageusement, le volume secondaire est inférieur à 700 ml, plus avantageusement inférieur à 500 ml.
